Europäisches Patentamt

European Patent Office

Office européen des brevets

(19)

(11) Veröffentlichungsnummer: **0 202 593**
**A1**

(12) # EUROPÄISCHE PATENTANMELDUNG

(21) Anmeldenummer: **86106538.1**

(22) Anmeldetag: **14.05.86**

(51) Int. Cl.4: **A21D 6/00 , A21D 8/04**

(30) Priorität: **18.05.85 ES 543276**

(43) Veröffentlichungstag der Anmeldung:
**26.11.86 Patentblatt 86/48**

(84) Benannte Vertragsstaaten:
**AT BE CH DE FR GB IT LI LU NL SE**

(71) Anmelder: **Fripast S.A.**
**Torres y Bages, 47**
**Sant Boi del Llobregat (Barcelona)(ES)**

(72) Erfinder: **Luengo, Carlos Antonio Jurado**
**Torres y Bages, 47**
**Sant Boi Del Llobregat Barcelona(ES)**

(74) Vertreter: **Schönherr, Wolfgang et al**
**Patentanwälte Wolfgang Schönherr Dipl.-Ing.**
**Karl-Heinz Serwe Hawstrasse 28**
**D-5500 Trier(DE)**

(54) **Verfahren zur Zubereitung von Backwaren, deren Teig mit einem Treibmittel versehen ist und die vor dem Backen in einer Tiefkühlvorrichtung aufbewahrt werden.**

(57) Bei einem Verfahren zur Zubereitung von Backwaren, deren Teig mit einem Treibmittel versehen ist und die vor dem Backen in einer Tiefkühlvorrichtung aufbewahrt werden, erfolgt die Gärung des gekneteten und geformten Teiges vor dem Tiefkühlen, wozu dem Teig Enzyme beigegeben werden, die die Stärke-Ketten spalten und Kohlendioxyd freisetzen, um dem Gärprozeß zu beschleunigen.

Vorteilhaft wird die Fermentierung vor dem Tiefkühlen abgeschlossen.

EP 0 202 593 A1

## Verfahren zur Zubereitung von Backwaren, deren Teig mit einem Treibmittel versehen ist und die vor dem Backen in einer Tiefkühlvorrichtung aufbewahrt werden.

Die Erfindung betrifft ein Verfahren zur Zubereitung von Backwaren, deren Teig mit einem Treibmittel versehen ist und die vor dem Backen in einer Tiefkühlvorrichtung aufbewahrt werden.

Es ist bekannt, Backwaren im handwerklichen Bäckerbetrieb oder industriell herzustellen und den vorbereiteten, gekneteten und geformten Teig vor dem Backen in einer Tiefkühlvorrichtung aufzubewahren. Dabei besteht jedoch der Nachteil, daß der mit Treibmittel versehene Teig eine verhältnismäßig lange Gärungszeit nach der Entnahme aus der Tiefkühlvorrichtung benötigt, ehe er gebacken werden kann.

Aufgabe der Erfindung ist es daher, ein Verfahren zur Zubereitung von Backwaren der oben genannten Art zu schaffen, durch das der Gärungsprozeß beschleunigt und der Teig sogleich nach dem Auftauen gebacken werden kann.

Zur Lösung dieser Aufgabe ist das Verfahren dadurch gekennzeichnet, daß die Gärung des gekneteten und geformten Teiges vor dem Tiefkühlen erfolgt, wozu dem Teig Enzyme beigegeben werden, die die Stärke-Ketten spalten und Kohlendioxyd freisetzen, um den Gärprozeß zu beschleunigen.

Vorteilhaft wird die Fermentierung vor dem Tiefkühlen abgeschlossen.

Der Vorteil des vorgeschlagenen Verfahrens liegt darin, daß zusätzliche Gärkammern für die Gärung des der Tiefkühlvorrichtung entnommenen Teiges überflüssig sind und daß keine Zeit zum Gehen des Teiges benötigt wird, sondern die vorbereiteten Teigstücke direkt von der Tiefkühlvorrichtung in den Backofen gegeben werden können.

Der verfahrensgang ist am Beispiel der Herstellung von Croissants schematisch dargestellt, wobei mit A die bisher übliche Herstellung im handwerklichen Bäckereibetrieb in einer Backmulde, mit B die bisher übliche industrielle Herstellung und mit C die Herstellung nach dem erfindungsgemäßen Verfahren angegeben ist.

Zur Herstellung von Croissants wird zunächst aus den üblichen Zutaten eine Grundmasse (1) gefertigt. Hierauf folgt das Kneten des Teiges bei - (2) und das Austrollen bei (3). Darauf gibt man der Teigmasse die gewünschte Form bei (4).

Bei einer industriellen Herstellung können so 3000 bis 4000 Einheiten je Stunde gefertigt werden. Bei der handwerklichen Herstellung sind es entsprechend weniger. Wen die Croissants ausgeformt sind, -sei es in industrieller Herstellung, sei es durch Herstellung nach der Erfindung, -werden sie bei (5) eingefroren.

Wenn man nach dem erfindungsgemäßen Verfahren bis zum Einfrieren gelangt ist, ist die Gärung bereits erfolgt. Dies wird durch Anwendung von Enzymen erreicht, die die Stärke-Ketten spalten und den späteren Einsatz von Hefe vorbereiten, wobei zur Beschleunigung der Gärung Kohlendioxyd ($CO_2$ Gas) freigesetzt wird.

Demgegenüber ist der Teig nach dem bisher bekannten industriellen Verfahren noch nicht gegärt, wenn er eingefroren wird. Vielmehr findet durch das Einfrieren zunächst eine Phase der Konservierung bei (6) statt, an die sich nach dem Auftauen bei (7) die Gärung anschließt. Dies erfolgt bei dem herkömmlichen industriellen Verfahren B in Gärkammern, bein handwerklichen Verfahren A an der frischen Luft. Der Gärprozeß dauert beim industriellen Verfahren etwa eine Stunde Teigruhe, während beim handwerklichen Verfahren fünf bis sechs Stunden benötigt werden.

Hiernach werden die Croissants bei (8) gebacken und gehen bei (9) zum Konsumenten.

Da nach dem erfindungsgemäßen Verfahren eine beschleunigte Gärung vor dem Tieffrieren erfolgt, ist eine bedeutende Abkürzung des gesamten Backverfahrens gegeben, wodurch eine Zeitersparnis von etwa einer Stunde erreicht wird.

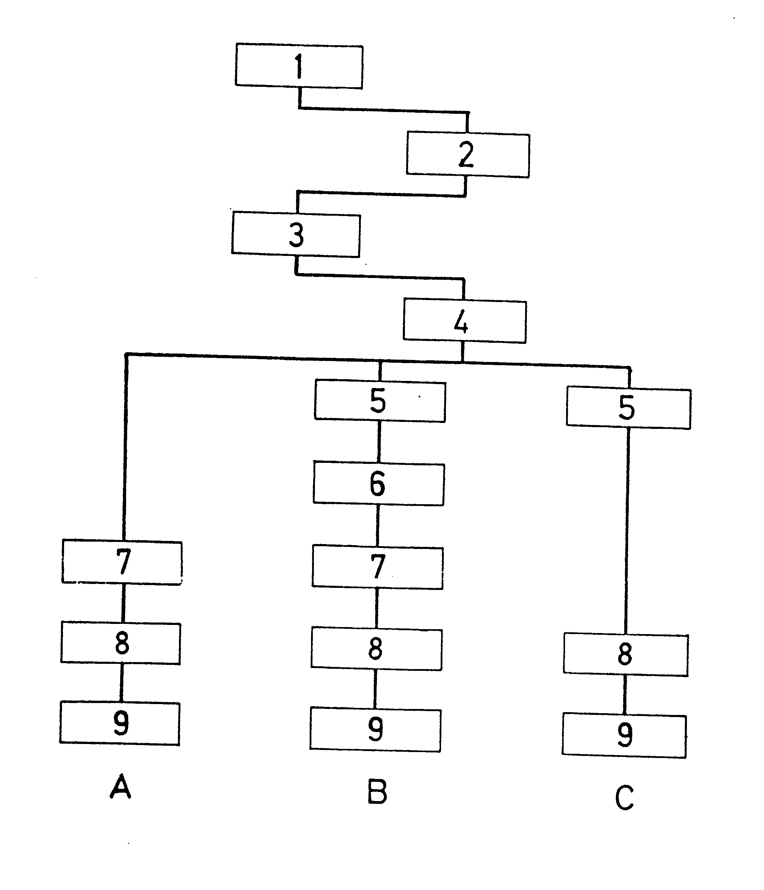

**Ansprüche**

1. Verfahren zur Zubereitung von Backwaren, deren Teig mit einem Treibmittel versehen ist und die vor dem Backen in einer Tiefkühlvorrichtung aufbewahrt werden, dadurch gekennzeichnet, daß die Gährung des gekneteten und geformten Teiges vor dem Tiefkühlen erfolgt, wozu dem Teig Enzyme beigegeben werden, die die Stärke-Ketten spalten und Kohlendioxyd freisetzen, um den Gärprozeß zu beschleunigen.

2. Verfahren nach Anspruch 1, dadurch gekennzeichnet, daß die Fermentierung vor dem Tiefkühlen abgeschlossen wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | BAKERS DIGEST, Band 58, Nr. 5, September/Oktober 1984, Seiten 8,11,12, Chicago, Illinois, US; A. HIMMELSTEIN: "Enzyme treatment of flour. Will it help frozen and retarded doughs?" * Seite 12 * | 1,2 | A 21 D    8/04<br>A 21 D    6/00 |
| | --- | | |
| X | FR-A-2 481 072  (M.L.G. POUPARD et al.) * Ansprüche 1,7; Seite 3,  Zeilen 14-25 * | 1,2 | |
| | --- | | |
| A | DE-C-  291 161   (DIAMALT-AG) | | |
| | --- | | |
| A | DE-A-2 052 572  (RÖHM GmbH) * Ansprüche 1,2 * | 1 | RECHERCHIERTE SACHGEBIETE (Int. Cl.4) |
| | ----- | | A 21 D |

Der vorliegende Recherchenbericht wurde für alle Patentansprüche erstellt.

| Recherchenort | Abschlußdatum der Recherche | Prüfer |
|---|---|---|
| DEN HAAG | 28-08-1985 | COUCKE A.O.M. |